# EUROPEAN PATENT SPECIFICATION

(11) **EP 0 922 484 B1**
(45) Date of publication and mention of the grant of the patent: **04.06.2003**
(21) Application number: 97121083.6
(22) Date of filing: 01.12.1997
(51) Int. Cl.: B01D 53/50, B01D 53/68, B01D 53/70

(54) **Method for treating incineration flue gas**
Verfahren zum Behandeln von Abgasen aus einer Verbrennung
Procédé pour traiter des gaz de fumée d'une combustion

(43) Date of publication of application: 16.06.1999
(73) Proprietor: NKK CORPORATION, Tokyo 100-0005 (JP)
(72) Inventor: Hamaguchi, Keizo, Kawasaki-ku, Kawasaki 210 (JP); Miyoshi, Yasuo, Kawasaki-ku, Kawasaki 210 (JP); Osada, Yo, Kawasaki-ku, Kawasaki 210 (JP); Fujisawa, Yoshinari, Kawasaki-ku, Kawasaki 210 (JP)
(74) Representative: Hansen, Bernd, Dr. Dipl.-Chem.

(56) References cited:
- EP-A- 0 253 480
- EP-A- 0 301 272
- EP-A- 0 717 260
- WO-A-88/06484
- WO-A-91/04780
- DE-A- 3 146 465
- US-A- 5 413 621

## Description

### Background of the invention

### 1. Field of the Invention

The present invention relates to a method for treating incineration flue gas, particularly to a method for treating flue gas generated from incineration of waste such as municipal waste.

### 2. Description of the Related Arts

A large portion of waste such as municipal waste are treated by incineration. Flue gas emitted from incinerators, however, contains acidic gas such as HCl and SOx and also contains soot and dust, so the flue gas is treated for cleaning thereof. A method for treating the flue gas is to absorb the acidic gas to slaked lime powder which is injected into the flue gas.

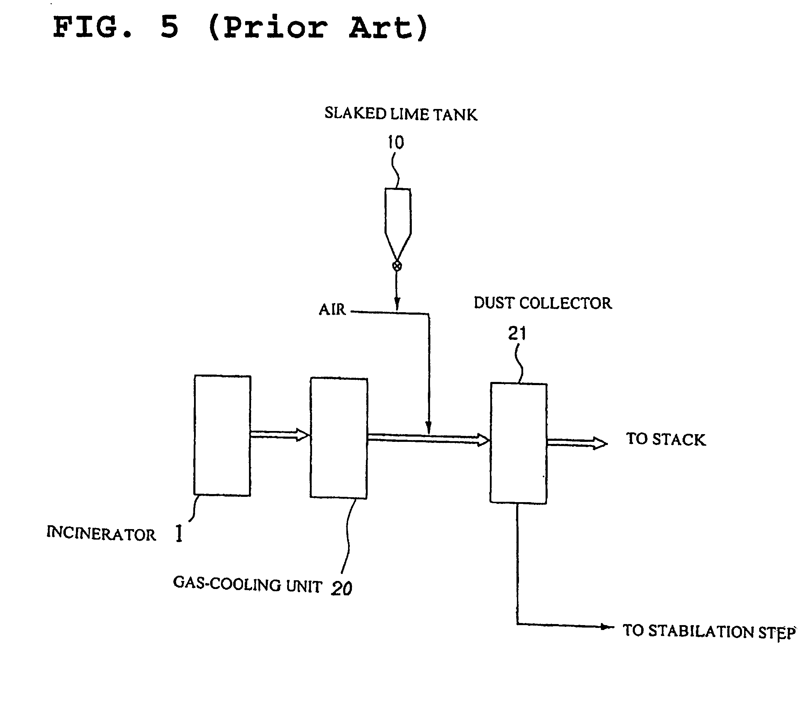

In a municipal waste incineration facility, the method for treating flue gas by the above-described dry-type flue gas treatment is conventionally conducted conforming to the process illustrated by Fig. 5. According to the process, flue gas emitted from an incinerator 1 enters a gas-cooling unit 20 such as cooling tower for cooling thereof. Then, slaked lime powder delivered from a slaked lime tank (10) is injected into the flue gas, where hydrogen chloride and the like in the flue gas are reacted with slaked lime, and diminish. The flue gas to which slaked lime powder was injected then enters a dust collector 21, and reaction products such as calcium chloride which was yielded by the injection of slaked lime powder and un-reacted slaked lime are collected along with the soot and dust which were emitted from the waste incinerator. Thus cleaned flue gas is vented to atmosphere.

On the other hand, the materials collected by the dust collector 21 contain toxic heavy metals, so the materials are classified as the special control general waste. Consequently, these materials are dumped after treated by either one of the four methods specified by the Minister of the Ministry of Health and Welfare: namely, melting to solidify, solidification with cement, stabilization by chemicals, and stabilization by acid extraction.

When the cleaning of flue gas by the above-described prior arts is performed, however, the removal of acidic gas is not sufficient. And, if a high removal efficiency is wanted, a large amount of slaked lime powder have to be injected. Therefore, the consumption of slaked lime increases and the discharged amount from the dust collector increases. As a result, dumping waste needs increased cost for stabilizing and detoxifying the discharged materials and increased cost for cleaning the flue gas.

Furthermore, flue gas emitted from incinerators of waste such as municipal waste contains toxic organic chlorine compounds such as dioxin. Although these organic chlorine compounds in flue gas are adsorbed to soot and dust in the course of flue gas treatment, thus the content of these toxic compounds in the flue gas gradually reduces before vented to atmosphere, the above-described prior arts gives not much reduction of the above-described organic chlorine compounds, so there remains a problem that some amount of the organic chlorine compounds are left in the vented flue gas.

### Summary of the Invention

It is an object of the present invention to provide a method for waste incineration flue gas, which method is able to efficiently remove acidic gas and to reduce residual amount of toxic organic chlorine compounds.

This object is achieved with the method according to claim 1. Preferred embodiments are shown in claims 2 and 3.

### Brief Description of the Drawings

Fig. 1 shows a schematic drawing of a method for treating incineration flue gas according to the present invention.
Fig. 2 shows a relation between flue gas temperature and removal efficiency of HCl.
Fig. 3 shows a relation between equivalent ratio of slaked lime powder and HCl removal efficiency.
Fig. 4 shows a relation between flue gas cooling temperature and dioxin residual concentration in flue gas.
Fig. 5 shows a schematic drawing of a conventional method for treating incineration flue gas.

### Description of the Embodiment

According to the present invention, the treatment process comprises the steps of: cooling the flue gas emitted from a waste incinerator to a temperature ranging from 120 to 200 °C; introducing the cooled flue gas to the first dust collector to remove soot and dust emitted from the waste incinerator; injecting slaked lime powder into the flue gas after removing soot and dust therefrom; introducing the flue gas containing the injected slaked lime powder into the second dust collector to collect dust; introducing a part of the dust collected by the second dust collector, along with slaked lime powder, into the flue gas after removing soot and dust therefrom.

In the above-described method for treating flue gas, the equivalent ratio of slaked lime powder to inject into the flue gas is preferably in a range of from 1.0 to 1.5.

The acidic gas according to the invention indicates HCl and SOx including SO₂ and SO₃.

The equivalent ratio of slaked lime powder is a ratio to theoretical necessary amount of slaked lime powder to complete a reaction with acidic gas existed in the flue gas in accordance with the following-equations (1) through (3), which equivalent ratio is computed on the basis of the equivalent amount of Ca(OH)₂ to the above-described acidic gas.

2HCl + Ca(OH)₂ = CaCl₂ + 2H₂O (1)

SO₂ + Ca(OH)₂ = CaSO₃ + H₂O (2)

SO₃ + Ca(OH)₂ = CaSO₄ + H₂O (3)

According to the method for treating flue gas of the present invention, the dust collection from the flue gas is carried out by two stages. That is, after completing the first dust collection, slaked lime is injected into the flue gas to absorb acidic gas. Accordingly, the first dust collector collects soot and dust ( fly ash ) emitted from the incinerator, and the second dust collector collects the injected slaked lime powder and reaction products of acidic gas. In this way, fly ash which contains toxic materials and thus cannot be dumped unless detoxification treatment is applied, and lime reaction products which do not contain toxic materials are collected separately from each other.

The reactions between slaked lime and HCl and SOx in the flue gas proceed in accordance with equations (1), (2), and (3), thus HCl and SOx are removed. These reactions are preferably carried out in an adequate temperature range. According to the present invention, the temperature range for carrying out the above-described reactions is limited from 120 to 200 °C because of two reasons given below.

First, the above-specified temperature range is given to efficiently carry out the reaction between acidic gas and slaked lime. As described later, according to the result of the tests performed by the inventors of the present invention, increased reaction temperature likely decreases the removal efficiency of acidic gas. If, however, the flue gas temperature is lowered below around 120 °C, the acidic gas reaches its dew point, which induces corrosion of facilities. Therefore, it is not favorable to reduce the flue gas temperature to below 120 °C. As a result, the lower limit of the flue gas temperature is specified to 120 °C.

Second, the above-specified temperature range is given to prevent re-synthesis of toxic organic chlorine compounds such as dioxin. Although the above-described organic chlorine compounds generated in an incinerator gradually diminish in the course of treatment process, if the flue gas temperature is left at a temperature range of from 200 to 300 °C, a reaction to re-synthesize the above-described organic chlorine compounds occurs, thus decreasing the rate of gradual diminishing. Accordingly, the upper limit of the flue gas temperature is specified to 200 °C to avoid to induce re-synthesis reaction of the above-described organic chlorine compounds.

According to the present invention, a portion of the dust which was collected by the second dust collector is returned to upstream side of the treatment flow to inject into the flue gas in order to efficiently carry out the reaction between acidic gas and slaked lime. Since the reaction between the acidic gas in the flue gas and the slaked lime powder is not carried out in wet state and since the reaction begins by contacting the slaked lime particles and the acidic gas, the reaction proceeds not so fast. Accordingly, the conversion of the injected slaked lime is very low, so the dust which was collected by the second dust collector includes large amount of un-reacted slaked lime. To cope with the phenomenon, the dust which contains the un-reacted slaked lime is returned to upstream side to perform recirculation injection, thus to increase the frequency of contact between the slaked lime particles and the acidic gas and to increase the contact time to increase the efficiency of the reaction between the slaked lime powder and the acidic gas.

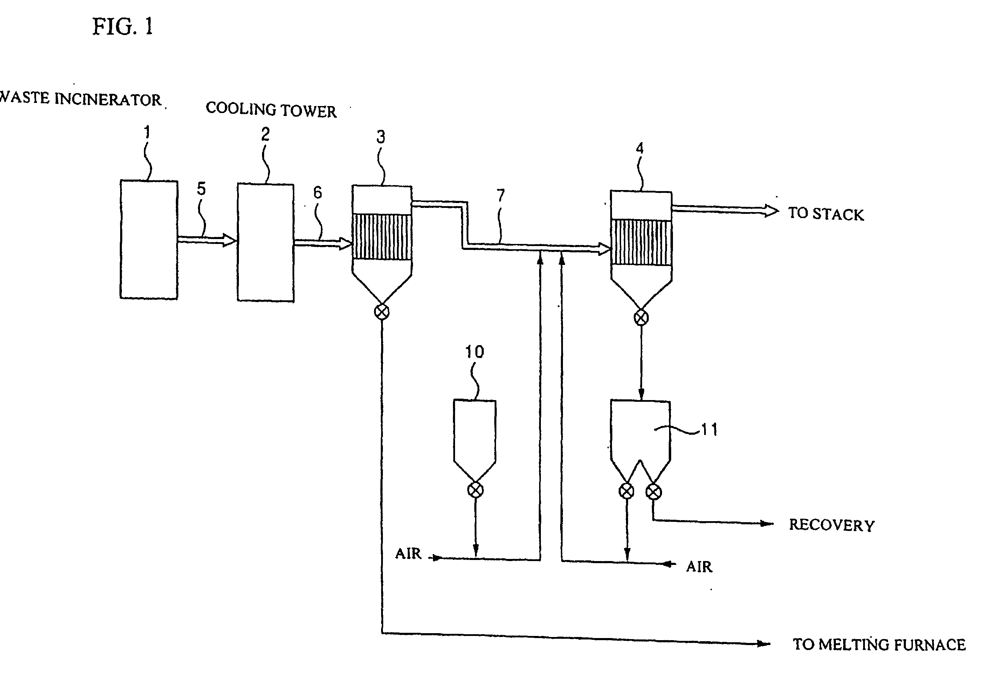

Fig. 1 shows an example flowchart of the practical application of the method according to the present invention. The flowchart shows a waste incinerator 1, a cooling tower 2, a first dust collector 3, a second dust collector 4, and flue gas ducts 5, 6, and 7, connecting those units.

The flue gas emitted from the waste incinerator 1 enters the cooling tower 2. Water is sprayed into the cooling tower 2 to cool the flue gas to a specified temperature in a range of from 120 to 200 °C. The cooled flue gas is then introduced to the first dust collector 3 to undergo dust collection. Fly ash emitted from the incinerator 1 is collected while the flue gas passes through the first dust collector 3 to a degree of 99 % or more. The collected fly ash is discharged from the process for separate treatment.

After removing fly ash, the flue gas passes through the duct 7 to enter the second dust collector 4. To the flue gas passing through the duct 7, slaked lime powder is injected, thus mixing the flue gas with the injected slaked lime powder. An amount of slaked lime corresponding to the analyzed concentration of acidic gas (HCl, SO₂, SO₃ ) in the flue gas is quantitatively delivered from the slaked lime tank 10, and is transferred by pneumatic conveyer, then is injected into the duct 7. The injected slaked lime powder is pneumatically transferred while reacting with the acidic gas in the flue gas. The reaction products and the un-reacted slaked lime powder, along with the flue gas, enter the second dust collector 4. The reaction products and un-reacted slaked lime powder which are carried as dust by the flue gas are collected by the second dust collector 4. The cleaned flue gas is sent to the stack. The collected dust is discharged from the second dust collector 4, and is stored in the reaction products storage tank 11.

The dust stored in the reaction products tank 11 contains un-reacted slaked lime powder, so a portion thereof is quantitatively withdrawn, and is pneumatically transferred to inject into the duct 7. The injected dust is mixed with flue gas along with the separately injected slaked lime powder, which are then collected by the second dust collector 4. In this way, slaked lime powder recirculates between the duct 7 and the second dust collector 4, and is collected by the second dust collector 4. And a portion of thus collected slaked lime powder corresponding to the injected amount of the slaked lime powder is withdrawn to be treated separately.

The amount of dust recirculated from the total dust amount collected by the second dust collector 4 is preferably in an approximate range of from 0.5 to 3.0 of ratio ( recirculation ratio ) to the amount of injected slaked lime powder. If the recirculation ratio is less than 0.5, removal of acidic gas becomes insufficient, and leaves lots of un-reacted slaked lime powder in the dust, which hinders utilization of the dust. Excess recirculation ratio, however, reduces the amount of un-reacted slaked lime in the dust, and the contact of un-reacted slaked lime with the acidic gas in the flue gas does not much increase, so the increase in removal efficiency of acidic gas cannot be expected to a high degree, and the load to second dust collector 4 increases. Accordingly, it is preferable to limit the recirculation ratio to about 3.0.

Applicable dust collector for implementing the method according to the present invention is not specifically limited in its type, and it may be a bag filter, an electric precipitator, or a cyclone separator. Among these types, bag filter which is a filter type dust collector is particularly preferable. When a bag filter is used as the first dust collector, a high collection efficiency is stably attained, and the collected fly ash forms a collection layer onto the surface of filter cloth, which layer is expected to enhance the absorption of the above-described organic chlorine compounds while the flue gas passes across the collection layer. When a bag filter is used as the second dust collector, a high collection efficiency is stably attained, and a collection layer comprising the reaction products and the un-reacted slaked lime powder is formed on the surface of the filter cloth, and the contact between the un-reacted slaked lime powder and the acidic gas is carried out efficiently because the flue gas passes across the collection layer, thus assuring the absorption of the acidic gas.

As described before, according to the invention, the dust collection of the flue gas is carried out by two stages. Accordingly, most of the fly ash which contains toxic materials are collected by the first dust collector 3, and very small amount thereof is collected at the second dust collector 4. Therefore, only the fly ash collected by the first dust collector 3 is to be sent to detoxification treatment such as melting treatment for treatment and discarding of the discharged materials. The fly ash discharged from the first dust collector 3 was collected before the injection of slaked lime powder, and the fly ash does not contain reaction products such as salt of calcium chloride (CaCl₂), thus the content of salts is not increased. Consequently, detoxification of fly ash by the melting process is readily applicable, which melting process was inhibited in the prior arts because of the presence of slats in the fly ash. In particular, even when the melting treatment using an electric resistance heating in melting furnace is applied, no hindrance against impressing power owing to the presence of molten salts occurs, and smooth operation is ensured.

The dust collected by the second dust collector 4 does not contain toxic materials, contains very small amount of un-reacted slaked lime, and shows high purity of calcium chloride, so the dust is able to be utilized.

### Examples

### (Test 1)

A flue gas was treated for cleaning using an apparatus shown in Fig. 1. The relation between flue gas temperature and acidic gas removal efficiency was investigated.

The flue gas emitted from a waste incinerator was sent to the cooling tower 2. Water was sprayed into the tower to cool the flue gas to settle the flue gas temperature at exit of the tower to several temperature levels, respectively. At each set temperature level, the removal efficiency of acidic gas was determined. The analysis of the flue gas (at exit of the cooling tower) was HCl ranging from 600 to 800 ppm, and SO₂ ranging from 30 to 50 ppm. The operating condition was the following. The computation of the amount of injection slaked lime did not account for the reaction amount of SO₃ because the content of SO₃ in the flue gas was slight.

| | |
|---|---|
| Flue gas temperature after cooled | 240 ∼ 120 °C |
| Equivalent ratio of slaked lime powder | 2.0 |
| Recirculation injection ratio | 0 |

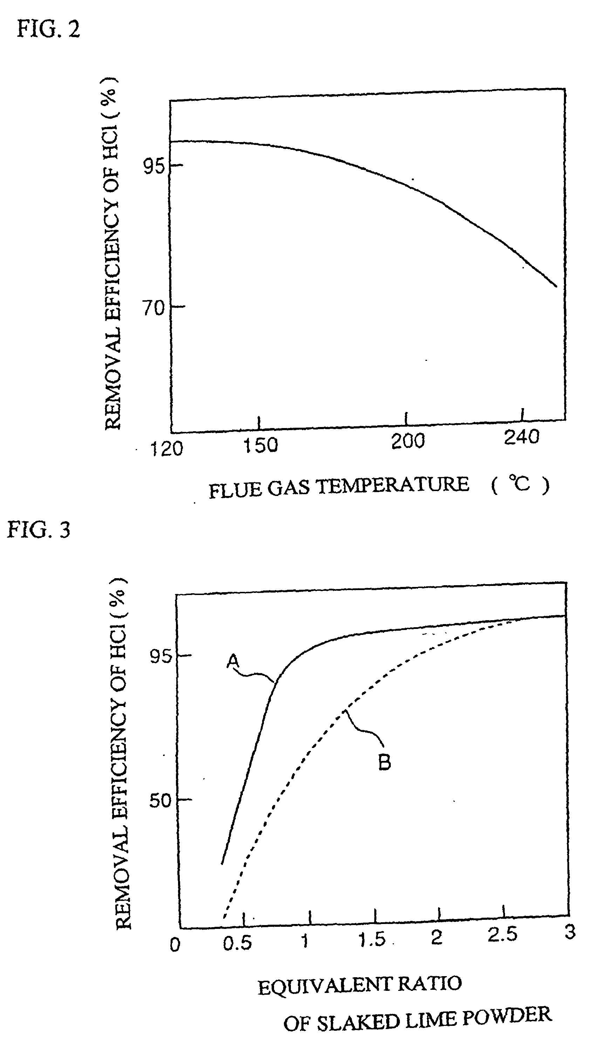

The result of test under the condition given above is shown in Fig. 2. In Fig. 2, most of the acidic gas in the flue gas was HCl, and the tendency of removal efficiency of HCl suggests the tendency of removal efficiency of total acidic gas. Consequently, the removal efficiency of total acidic gas was represented by the removal efficiency of HCl.

According to Fig. 2, the removal efficiency of HCl decreases with the increase of flue gas temperature. In particular, when the flue gas temperature exceeded around 200 °C, the removal efficiency of HCI showed a sudden drop.

### (Test 2)

The effect of recirculation injection of slaked lime powder was investigated. The flue gas emitted from a waste incinerator was introduced into the cooling tower 2. Water was sprayed into the tower to cool the flue gas. The flue gas temperature at exit of the tower was set to 180 °C. The operation was carried out with changed equivalent ratio of slaked lime powder. The HCl removal efficiency was determined to each level of equivalent ratio of slaked lime. The flue gas analysis (at exit of the cooling tower) during the test showed almost the same result with that in Test 1 for both HCl and SO₂. The test condition was the following. For comparison, an operation without recirculation injection of slaked lime was also carried out.

| | |
|---|---|
| Flue gas temperature after cooled | 180 °C |
| Equivalent ratio of slaked lime powder | 0.5 ∼ 3 |
| Recirculation ratio | 1.0 |

The result is shown in Fig. 3. The curve A is the result of the method according to the present invention, and the curve B is the result of the case that no recirculation injection of dust was applied. As seen in the figure, the curve A with recirculation injection of slaked lime gives an extremely good result providing the removal efficiency of HCI as high as 95% even at around 1.0 of equivalent ratio of slaked lime powder. Furthermore, even when the equivalent ratio of slaked lime powder is increased to 1.5 or more, the increase of HCl removal efficiency is very little, and no further injection is not necessary. To the contrary, the HCl removal efficiency in the case of curve B without recirculation injection of slaked lime is significantly lower than that in the case of curve A, and the equivalent ratio of slaked lime needs to be increased to 2.0 or more to attain 95% or higher HCI removal efficiency.

### (Test 3)

Dioxin concentration was determined at several sections in the flue gas passage by introducing the flue gas emitted from a waste incinerator to the cooling tower 2, under a condition that the cooled flue gas temperature at exit of the tower was set to 180**°C** and to 240 °C, respectively.

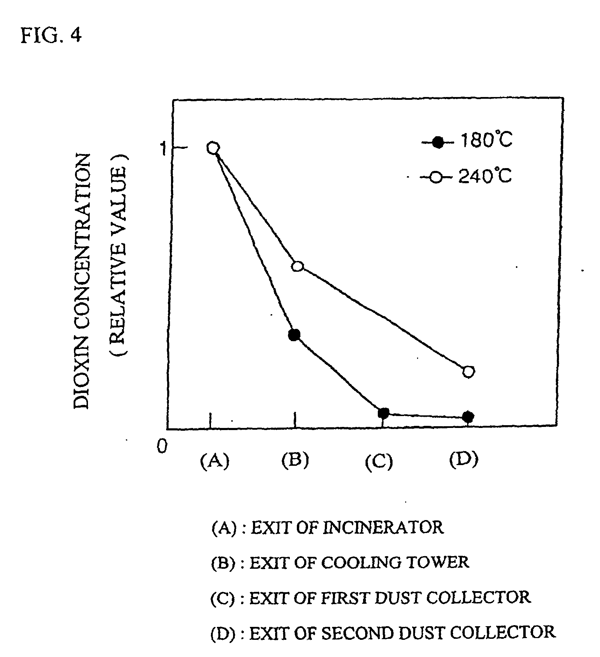

The result is shown in Fig. 4. Closed circle in the figure indicates that the flue gas temperature was set to 180 °C, and open circle indicates that the flue gas temperature was set to 240 °C. As seen in the figure, at lower flue gas temperature, most of dioxin in the flue gas vanished while the flue gas passed across the first dust collector. Comparison of dioxin concentration in the reaction products which were collected by the second dust collector between 180 °C and 240 °C of flue gas temperature revealed that the dioxin concentration in the case of 180 °C was about one tenth to the case of 240 °C.

According to the present invention, the flue gas is cooled to a temperature ranging from 120 to 200 °C, followed by injection of slaked lime powder and simultaneously by recirculation injection of slaked lime. Accordingly, a high removal efficiency of acidic gas is attained without injection of large amount of slaked lime powder.

In addition, according to the present invention, the flue gas temperature is limited to the above-specified range, so there occurs no re-synthesis of toxic organic chlorine compounds, thus the residual amount of toxic organic chlorine compounds in the flue gas is extremely reduced.

## Claims

1. A method for treating waste incineration flue gas which contains soot and dust, toxic organic chlorine compound HC1 and SOx the method comprising the steps of:
(a) cooling a flue gas emitted from a waste incinerator to a temperature range of from 120 to 200°C;
(b) removing soot and dust emitted from the waste incinerator by introducing the cooled flue gas to a first dust collector using a bag filter;
(c) injecting slaked lime powder into the flue gas from which soot and dust were removed to react the lime powder with HC1 and SOx contained in the flue gas;
(d) collecting dust by introducing the flue gas, to which slaked lime powder was injected, to a second dust collector using a bag filter; and
(e) injecting dust which was collected by the second dust collector, along with the slaked lime in the step (c), into the flue gas from which soot and dust were removed.

2. A method of claim 1, wherein the slaked lime which is injected into the flue gas has an equivalent ratio of from 1.0 to 1.5, where the equivalent ratio is the ratio of the theoretically necessary amount of slaked lime to complete the reaction with acidic gas existing in the flue gas.

3. A method of claim 1, wherein the ratio of the amount of dust injected in the step (e) to the amount of slaked lime powder injected in the step (c) is in a range of from 0.5 to 3.

## Patentansprüche

1. Verfahren zur Behandlung von Abfallverbrennungsabgas, das RU_{SS} und Staub, toxische organische Chlorverbindungen, HC1 und SOₓ enthält, das die folgenden Schritte umfasst:
(a) Kühlen des Abgases, das von einer Abfallverbrennungsanlage abgegeben wird, auf eine Temperatur im Bereich von 120-200°C,
(b) Entfernen des Russes und des Staubs, die von der Abfallverbrennungsanlage emittiert werden, durch Einführen des gekühlten Abgases in einen ersten Staubkollektor mit einem Beutelfilter,
(c) Injizieren von gelöschtem Kalkpulver in das Abgas, aus dem Russ und Staub entfernt wurden, wodurch das Kalkpulver mit in dem Abgas enthaltenem HC1 und SOₓ reagiert,
(d) Abtrennung von Staub durch Einführen des Abgases, in das gelöschtes Kalkpulver injiziert wurde, in einen zweiten Staubkollektor unter Verwendung eines Beutelfilters, und
(e) Injizieren des Staubs, der durch den zweiten Staubkollektor abgetrennt wurde, zusammen mit dem gelöschten Kalk aus Schritt (c) in das Abgas, aus dem Russ und Staub entfernt wurden.

2. Verfahren gemäss Anspruch 1, worin der gelöschte Kalk, der in das Abgas injiziert wird, ein Äquivalenzverhältnis von 1,0-1,5 aufweist, wobei das Äquivalenzverhältnis das Verhältnis der theoretisch notwendigen Menge an gelöschtem Kalk zur vollständigen Reaktion des in dem Abgas vorhandenen sauren Gases ist.

3. Verfahren gemäss Anspruch 1 worin das Verhältnis der Menge an in Schritt (e) injiziertem Staub zu der Menge an in Schritt (c) injiziertem gelöschten Kalkpulver im Bereich von 0,5-3 liegt.

## Revendications

1. Procédé pour le traitement de gaz de combustion de l'incinération de déchets, qui contient de la suie et de la poussière, un composé chloré organique toxique HC1 et SOx, le procédé comprenant les étapes consistant à:
(a) refroidir un gaz de combustion émis par un incinérateur de déchets, jusqu'à un intervalle de température de 120 à 200°C;
(b) enlever la suie et la poussière émises par l'incinérateur de déchets en introduisant le gaz de combustion refroidi dans un premier collecteur de poussière utilisant un filtre à manches;
(c) injecter de la chaux éteinte en poudre dans le gaz de combustion dont la suie et la poussière ont été enlevées, pour faire réagir la chaux en poudre avec le HC1 et le SOx contenus dans le gaz de combustion;
(d) collecter la poussière en introduisant le gaz de combustion, dans lequel de la chaux éteinte en poudre a été injectée, dans un second collecteur de poussière utilisant un filtre à manches; et
(e) injecter la poussière qui a été collectée par le second collecteur de poussière, avec la chaux éteinte dans l'étape (c), dans le gaz de combustion dont la suie et la poussière ont été enlevées.

2. Procédé selon la revendication 1, dans lequel la chaux éteinte qui est injectée dans le gaz de combustion a un rapport d'équivalence de 1,0 à 1,5, où le rapport d'équivalence est le rapport de la quantité théoriquement nécessaire de chaux éteinte pour effectuer la réaction avec le gaz acide existant dans le gaz de combustion.

3. Procédé selon la revendication 1, dans lequel le rapport de la quantité de poussière injectée dans l'étape (e) à la quantité de chaux éteinte en poudre injectée dans l'étape (c) se situe dans un intervalle de 0,5 à 3.
